Europäisches Patentamt

European Patent Office

Office européen des brevets

(19)

(11) Veröffentlichungsnummer: **0 053 170**
**B1**

(12) # EUROPÄISCHE PATENTSCHRIFT

(45) Veröffentlichungstag der Patentschrift:
**18.12.85**

(51) Int. Cl.⁴: **B 66 F 9/07**

(21) Anmeldenummer: **81901806.0**

(22) Anmeldetag: **12.06.81**

(86) Internationale Anmeldenummer:
**PCT/DE 81/00088**

(87) Internationale Veröffentlichungsnummer:
**WO 81/03653 (24.12.81 Gazette 81/30)**

(54) **PALETTEN-LAGEREINRICHTUNG.**

(30) Priorität: **13.06.80 DE 3022160**
**26.08.80 DE 3032050**

(43) Veröffentlichungstag der Anmeldung:
**09.06.82 Patentblatt 82/23**

(45) Bekanntmachung des Hinweises auf die Patenterteilung:
**18.12.85 Patentblatt 85/51**

(84) Benannte Vertragsstaaten:
**DE FR**

(56) Entgegenhaltungen:
**DE - A - 1 957 753**
**DE - A - 2 221 789**
**FR - A - 2 185 586**
**US - A - 3 800 963**

(73) Patentinhaber: **THEOBALD, Wolfgang, Merschstrasse 5,**
**D-5758 Fröndenberg-Warmen (DE)**

(72) Erfinder: **THEOBALD, Wolfgang, Merschstrasse 5,**
**D-5758 Fröndenberg-Warmen (DE)**

(74) Vertreter: **Henfling, Fritz, Dipl.-Ing., Beurhausstraße 9,**
**D-4600 Dortmund 1 (DE)**

**Beschreibung**

Die Erfindung bezieht sich auf eine Paletten-Lagereinrichtung, insbesondere zur Einlagerung von Langgut, bestehend aus

– Regalen, die übereinander im Abstand voneinander eine Mehrzahl von Fächern aufweisen, die von eingelagerte Paletten an den Stirnseiten unterfangenden, an Stützen angeordneten Konsolen gebildet werden,

– aus einer entlang und/oder quer zu den Regalen bewegbaren Überhebevorrichtung für die Paletten mit einer Vorrichtung zum Ein- und Auslagern der Paletten in Gestalt von in die Regale hinein verlagerbaren, die Paletten an den Enden unterfangenden, absenkbar auf Bestandteil der Überhebevorrichtung bildenden, spurgebundenen Wagen angeordneten Trägern, wobei für die Wagen in den Regalen unterhalb der die Paletten unterfangenden Konsolen über die Konsolen vorspringende Fahrbahnen vorgesehen sind,

– und Bestandteil der Lagereinrichtung bildenden selbsttragenden Paletten.

Eine solche Palettenlagereinrichtung ist beispielsweise beschrieben in der DE-A 23 24 907 (& FR-A 2.185.586). Ganz allgemein ist man bei Lagereinrichtungen bestrebt, den von den Bestandteil der Lagereinrichtung bildenden Regalen eingenommenen Raum optimal auszunutzen. Bei der vorbekannten Lagereinrichtung ist der Totraum, also der nicht für die Einlagerung von Lagergut zur Verfügung stehende Raum, noch vergleichsweise gross, da zwischen den eingelagerten Paletten ein Abstand entsprechend der Höhe der Wagen zum Ein- und Auslagern der Paletten einschliesslich des Transporthubs des Bestandteil der Wagen bildenden Palettenträgers zuzüglich eines Sicherheitsabstandes belassen werden muss.

Ausgehend von im Vorausgehenden umrissenen Stand der Technik liegt der Erfindung demgemäss die Aufgabe zugrunde, Lagereinrichtungen der eingangs umrissenen Gattung so auszugestalten, dass der Totraum minimiert wird.

Die Aufgabe wird mit einer Lagereinrichtung der eingangs umrissenen Gattung gelöst, die erfindungsgemäss Paletten verwendet, die mit die Fahrbahnen für die mit den Palettenträgern versehenen Wagen in den Regalen übergreifenden auskragenden Auflagen versehen sind, und die im Abstand von den Fahrbahnen unter Bildung von Fahrwegen für die Wagen enden.

Damit wird es möglich, den Totraum in den Regalen im wesentlichen auf die Fahrwege für die Wagen zum Ein- und Auslagern der Paletten zu beschränken und im übrigen eine dichte Packung der Paletten in den Regalen zu realisieren, die lediglich einen dem Transporthub des Palettenträgers einschliesslich eines geringen Sicherheitsabstandes entsprechenden Abstand zwischen den eingelagerten Paletten belässt. Die auf diese Weise erzielbare Vergrösserung der Lagerkapazität bei im übrigen gleichbleibenden Aussenabmessungen des Lagers bzw. der Regale macht sich insbesondere bei der Einlagerung von Langgut bemerkbar. Erzielen lässt sich auf diese Weise, bezogen auf vergleichbare bekannte Lagereinrichtungen, eine Vergrösserung der Lagerkapazität in der Grössenordnung von 20–30%.

Zumal bei erfindungsgemässen Lagereinrichtungen zur Einlagerung von Langgut erweist sich eine Zwangsführung der mit den Palettenträgern ausgerüsteten Wagen auf den Bestandteil der Regale bildenden Fahrbahnen für die Wagen als zweckmässig. Hierfür können auf den Fahrbahnen Spurleisten und zwischen den Laufrädern der Wagen Führungsrollen vorgesehen sein. In weiterer Ausgestaltung kann die Oberfläche der die Paletten unterfangenden Träger dann auch von Querrollen gebildet werden, woraus eine Querverschieblichkeit der auf den Trägern ruhenden Palette resultiert, die insbesondere bei Langgut aufnehmenden Paletten erforderlich werden kann. Auf den die Paletten im Regal unterfangenden Konsolen vorgesehene seitliche Anschläge stellen das lagerechte Absetzen der Paletten im Regal sicher.

Bei der Bestandteil der Lagereinrichtung nach der Erfindung bildenden Überhebevorrichtung für die Paletten kann es sich sowohl um einen Hubwagen handeln als auch um einen Bestandteil eines Portalkrans oder dergleichen bildenden Hubbalken. Als Antrieb für die Bestandteil der Überhebevorrichtung bildenden Wagen zum Ein- und Auslagern der Paletten bieten sich insbesondere reversierbare Kettentriebe an. Die spezielle Ausgestaltung sowohl der Überhebevorrichtung als auch des Antriebes für die Bestandteil der Überhebevorrichtung bildenden Wagen zum Ein- und Auslagern der Paletten ist nicht Gegenstand der Erfindung. Die bevorzugte Anwendung der Erfindung bei Lagereinrichtungen für Langgut schliesst ihre Anwendung bei kleineren Paletten aufnehmenden Lagereinrichtungen mit übereinander und nebeneinander liegenden Regalfächern nicht aus.

In der Zeichnung ist die Erfindung anhand von in schematischer Weise dargestellten Ausführungsbeispielen weitergehend erläutert. Es zeigen:

Figur 1 einen Ausschnitt aus einem ganz schematisch dargestellten Hochregallager mit ihm zugeordneter, die Regale unterfahrender Überhebevorrichtung in Seitenansicht,

Figur 2 die Bestandteil der Überhebevorrichtung bildende, erfindungsgemäss ausgestaltete Vorrichtung zum Ein- und Auslagern der Paletten in grösserem Massstab, geschnitten,

Figur 3 einen Schnitt nach Linie III–III in Figur 2,

Figur 4 die in das Regal hineinverlagerte Vorrichtung zum Ein- und Auslagern der Paletten in Frontansicht,

Figur 5 eine abgewandelte Ausführungsform der Vorrichtung zum Ein- und Auslagern der Paletten, geschnitten,

Figur 6 den Ausschnitt VI in Figur 5 in grösserem Massstab.

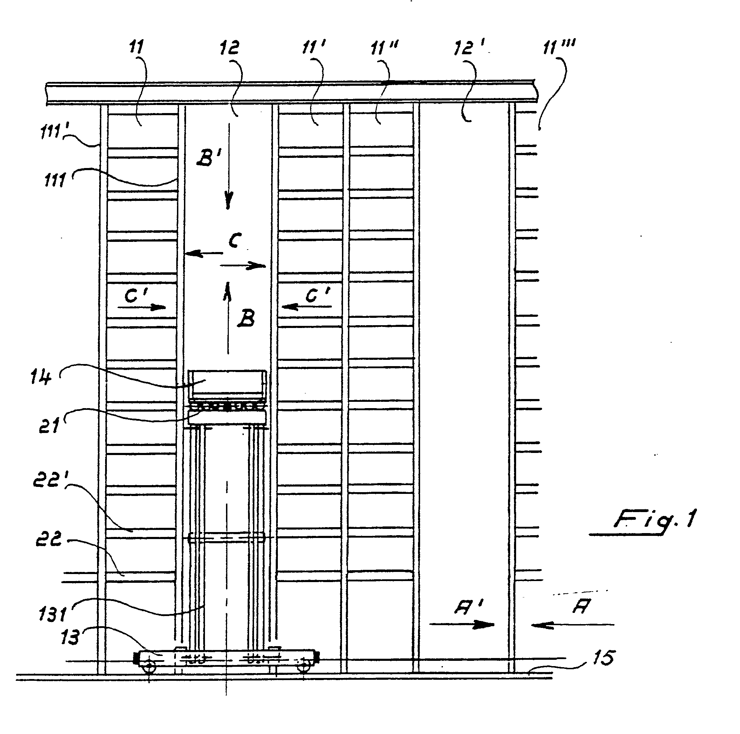

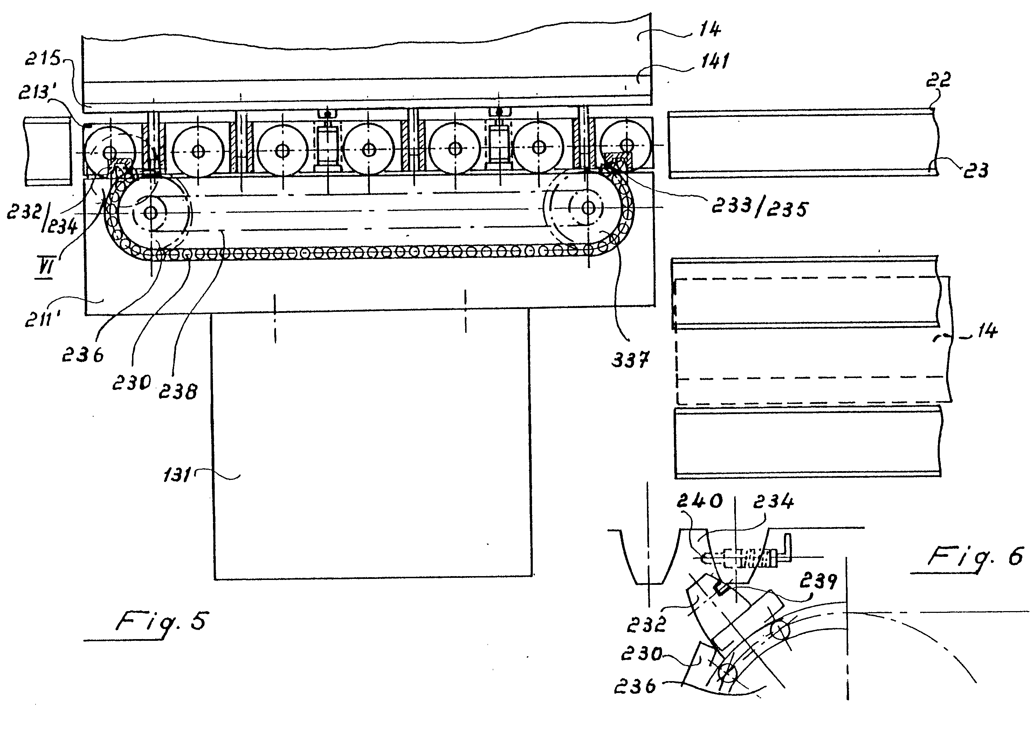

Von dem in Figur 1 teilweise dargestellten Hochregallager sind erkennbar die Regale 11, 11', 11'' und 11''', die unter Bildung von Gassen 12, 12' aufgestellt sind. Die Regale werden gebildet von Holmen 11, 111′ ... und Stegen 22, 22′ ... wobei die Stege, die die eingelagerten Paletten 14 unterfangenden Konsolen sind (Figur 4).

Mit 13 ist ein spurgebundener (15), die bodenfrei aufgeständerten Regale 11, 11′ ... unterfahrender Hubwagen bezeichnet, mit dem die einzulagernden Paletten 14 unter den Regalen her in die Gasse befördert werden, an der das Regal liegt, in das die Palette eingelagert werden soll, und in der Gasse auf das Niveau des Regalfaches überhoben wird, das die Palette aufnehmen soll, in das die Palette sodann mit Hilfe der Bestandteil des Hubwagens bildenden Vorrichtung 21 zum Ein- und Auslagern der Palette eingelagert wird. Das Auslagern von Paletten erfolgt sinngemäss in umgekehrter Reihenfolge. Die Pfeile A, A′ in Figur 1 deuten den Quertransport unter den Regalen her an, die Pfeile B, B′ das Überheben in den Gassen und die Pfeile C, C′ das Ein- bzw. Auslagern der Paletten.

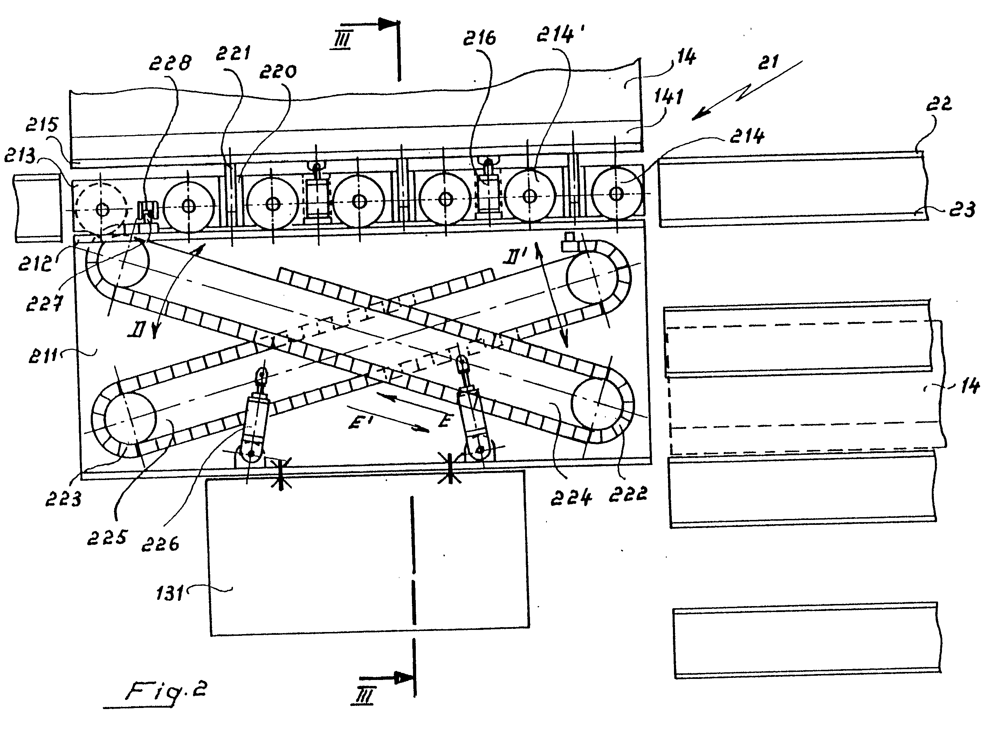

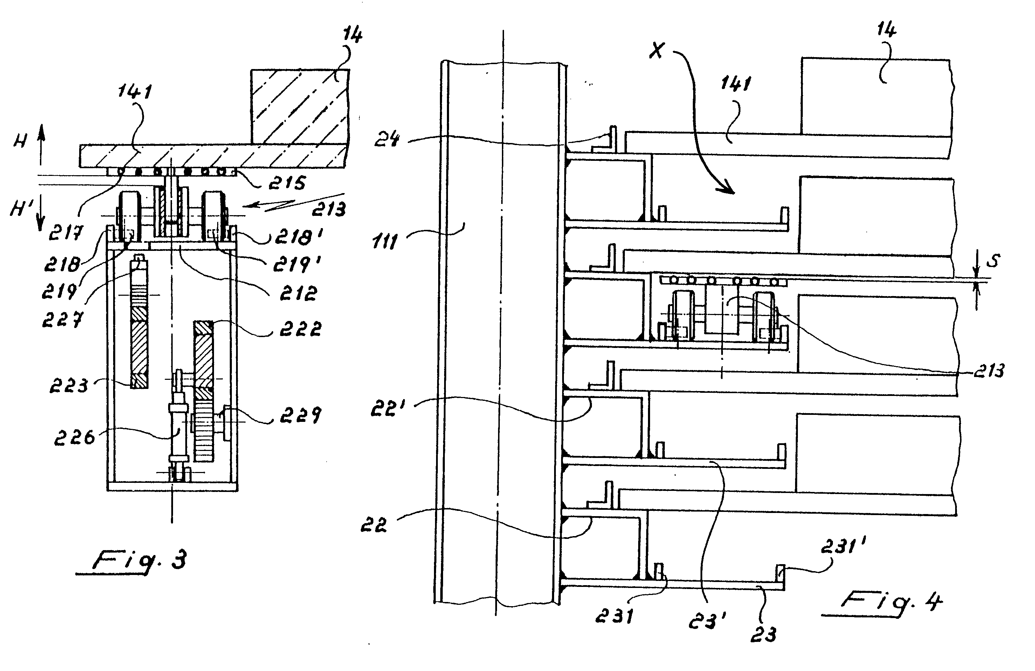

Die in Figur 1 nur ganz schematisch angedeutete Vorrichtung 21 zum Ein- und Auslagern der Paletten 14 ist in den Figuren 2 und 3 in einer der Erfindung entsprechenden Ausgestaltung dargestellt. Danach trägt das Bestandteil des Hubwagens 13 bildende Hubwerk 131 einen Getriebekasten 211, dessen Oberfläche 212 die Fahrbahn für einen mit einer Mehrzahl von Laufrollensätzen 214, 214′ ... bestückten Wagen 213 bildet, auf dem ein die Palette 14 bzw. eine auskragende Auflage 141 (Figur 3) der Palette 14 unterfangender Träger 215 unter Einfügung von Hubzylindern 216 absenkbar angeordnet ist. Die Oberfläche des Trägers 215 wird gebildet von Querrollen 217 nach Art eines Rollganges (Figur 3).

Spurleisten 218, 218′ auf der Fahrbahn 212 und gegen die Spurleisten 218, 218′ auflaufende Führungsrollen 219, 219′ am Wagen 213 dienen der Führung des Wagens 213 auf der Fahrbahn 212 (Figur 3). Führung 220/221 zwischen Wagen 213 und Palettenträger 215 dienen der Führung des gegenüber dem Wagen 213 heb- und absenkbaren (Pfeile H, H′ in Figur 3) Trägers 215.

Die Regale 11, 11′ ... und die Paletten 14 sind erfindungsgemäss in der Weise angepasst, dass unterhalb jeder Bestandteil der Regale bildenden Konsole 22, 22′ ... eine über die Konsole vorspringende Fahrbahn 23, 23′ ... für die in die Regale hinein verfahrbaren, Bestandteil der Vorrichtung zum Ein- und Auslagern der Paletten bildenden Wagen 213 vorgesehen ist, und die Paletten 14 mit über die Stirnseiten der Paletten vorspringenden, die Fahrbahnen 23, 23′ überbrückenden Auflagen 141 versehen sind, mit denen sich die Paletten 14 auf den Konsolen 22, 22′ ... abstützen. Die Fahrbahnen 23, 23′ ... sind zweckmässigerweise ebenfalls mit Spurleisten 231, 231′ versehen, gegen die Führungsrollen 219, 219′ am Wagen 213 auflaufen, die die Paletten 14 unterfangenden Konsolen 22, 22′ ... zweckmässigerweise mit Anschlägen 24 zur Lagefixierung der Paletten 14 im Regal.

Für die Ausgestaltung des Kettentriebes zum Verfahren des mit dem Palettenträger 215 ausgerüsteten Wagens 213 in die Regale hinein bzw. aus den Regalen heraus bietet sich beispielsweise eine Lösung gemäss den Figuren 2 und 3 an. Danach sind in dem Getriebekasten 211 zwei Stossketten 222, 223 tragende Schwingen 224, 225 angeordnet, die mittels hydraulischer Zylinder 226 im Sinne der Doppelpfeile D, D′ in Figur 2 verschwenkbar sind. Im nach oben verschwenkbaren Zustand (Schwinge 224 in Figur 2) greift die an der Stirnseite mit einem Mitnehmer 227 versehene Stosskette 222 in eine Aufnahme 228 am Wagen 213 ein und die angetriebene (229) im Sinne des Pfeiles E ausfahrende Stosskette 222 verfährt den mit dem Palettenträger 215 ausgerüsteten Wagen 213 in das Regal hinein, aus dem sie den Wagen beim Rücklauf (Pfeil E′) dann auch wieder auf die Überhebevorrichtung zurück überführt.

Bei der Ausführungsform nach den Figuren 5 und 6 ist ein ständig in Eingriffposition befindlicher Kettentrieb 230 vorgesehen, der wahlweise an der einen oder an der anderen Stirnseite des Wagens 213′ angreift, wobei jeweils ein Mitnehmer 232 bzw. 233 in die entsprechende Aufnahme 234 bzw. 235 am Wagen 213′ eingreift. Von den beiden Stirnrädern 236, 237, um die herum die Stosskette 230 geführt ist, ist eines unmittelbar angetrieben, der Antrieb des anderen erfolgt mittelbar vom unmittelbar angetriebenen Stirnrad aus über eine Antriebskette 238.

Wie aus Figur 6 ersichtlich ist, kann zwischen Mitnehmer (z,B. 232) und Aufnahme (z.B. 234) eine Evolventen-Verzahnung vorgesehen sein, ausserdem eine lösbare, formschlüssige Verbindung 239, 240, damit der Eingriff zwischen Mitnehmer und Aufnahme sichergestellt bleibt.

Die neue Einrichtung funktioniert beim Einlagern von Paletten wie im folgenden näher beschrieben:

Zunächst wird die einzulagernde Palette 14 mittels des Hubwagens 13 in die Gasse verfahren (Pfeil A in Figur 1), in der das Regal liegt, in die die Palette eingelagert werden soll und mittels des Hubwerks 131 auf das Niveau des Regalfachs überhoben (Pfeil B in Figur 1), in dem sie abgesetzt werden soll. In der angesteuerten Überhebeposition fluchten die Bestandteil der Vorrichtung zum Ein- und Auslagern der Paletten bildenden Fahrbahnen 212, für die mit den die Palette 14 unterfangenden Palettenträgern 215 ausgerüsteten Wagen 213 mit den unterhalb der Regalkonsolen 22, 22′ ... zum Absetzen der Palette 14 vorgesehenen Regal-Fahrbahnen 23, 23′ .... Die Wagen 213 werden sodann in das Regal hinein verfahren (Pfeil C in Figur 1), und zwar bei angehobenen Palettenträgern (Pfeil H in Figur 3). Ist der Wagen in das Regal hinein verfahren, werden die Palettenträger 215 abgesenkt (Pfeil H′ in Figur 3), wobei sich die Palette 14 mit ihren Auflagen 141 auf den über den Fahrbahnen 23, 23′ befindlichen Konsolen 22, 22′ ... absetzt (Figur 4). Der Hub der Palettenträger 215 gegenüber den Wagen 213 ist dabei so ausgelegt, dass nach dem Absetzen der Palette 14 ein hineinreichendes Spiel zwischen der Palette 14 und dem wieder aus dem Regal zu verfahrenden Wagen 213 vorhanden ist.

Das Auslagern von Paletten aus der Lagereinrichtung erfolgt sinngemäss.

Sowohl das Spiel s (Figur 4) als auch der Hub H, H' (Figur 3) können vergleichsweise gering gehalten werden. Darüber hinaus entfällt die Bereitstellung von Raum zwischen den Regalfächern für die nach aussen verlagerte Vorrichtungen zum Ein- und Auslagern der Paletten. Daraus resultiert zumal bei Lagereinrichtungen für Langgut bei mit bekannten Einrichtungen übereinstimmendem Gesamtvolumen der Lagereinrichtung eine wesentlich grössere Lagerkapazität.

**Patentansprüche**

1. Palettenlagereinrichtung, insbesondere zur Einlagerung von Langgut, bestehend aus
– Regalen (11, 11' …), die übereinander im Abstand voneinander eine Mehrzahl von Fächern aufweisen, die von eingelagerte Paletten (14) an den Stirnseiten unterfangenden, an Stützen (111) angeordneten Konsolen (22, 22' …) gebildet werden,
– einer entlang und/oder quer zu den Regalen (11, 11' …) bewegbaren Überhebevorrichtung (13, 131) für die Paletten (14) mit einer Vorrichtung (21) zum Ein- und Auslagern der Paletten (14) in Gestalt von in die Regale (11, 11' …) hinein verlagerbaren, die Paletten (14) an den Enden unterfangenden, absenkbar auf Bestandteil der Überhebevorrichtung bildenden, spurgebundenen Wagen (213) angeordneten Trägern (215), wobei für die Wagen (213) in den Regalen (11, 11' …) unterhalb der die Paletten (14) unterfangenden Konsolen (22, 22' …) über die Konsolen (22, 22' …) vorspringende Fahrbahnen (23, 23' …) vorgesehen sind,
– und Bestandteil der Lagereinrichtung bildenden selbsttragenden Paletten (14), dadurch gekennzeichnet, dass die mit die Fahrbahnen (23, 23' …) für die mit den Palettenträgern (215) versehenen Wagen (213) in den Regalen übergreifenden auskragenden Auflagen (141) versehenen Paletten (14) im Abstand von den Fahrbahnen (23, 23' …) unter Bildung von Fahrwegen (x) für die Wagen (213) enden.

2. Einrichtung nach Anspruch 1, gekennzeichnet durch eine Zwangsführung der mit den Trägern (215) für die Paletten (214) ausgerüsteten Wagen (213) auf den Bestandteil der Regale (11, 11' …) bildenden Fahrbahnen (23, 23' …).

3. Einrichtung nach Anspruch 2, gekennzeichnet durch auf den Fahrbahnen (23, 23' …) vorgesehene Spurleisten (231, 231') und zwischen den Laufrädern (214, 214' …) der Wagen (213) vorgesehene Führungsrollen (218, 218').

4. Einrichtung nach einem der Ansprüche 1 bis 3, dadurch gekennzeichnet, dass die Oberfläche der die Paletten (14) unterfangenden Träger (215) von Querrollen (217) gebildet wird.

5. Einrichtung nach einem der Ansprüche 1 bis 4, dadurch gekennzeichnet, dass auf den die Paletten (14) im Regal (11, 11' …) unterfangenden Konsolen (22, 22' …) seitliche Anschläge (24) vorgesehen sind.

6. Einrichtung nach einem der Ansprüche 1 bis 5, dadurch gekennzeichnet, dass die die Paletten (14) in den Regalen (11, 11' …) unterfangenden Konsolen (22, 22' …) und die in den Regalen (11, 11' …) vorgesehenen Fahrbahnen (23, 23' …) für die mit den die Paletten (14) unterfangenden Träger (215) ausgerüsteten Wagen (213) Bestandteil eines Walz- bzw. Ziehprofils sind.

**Claims**

1. Pallet storage installation, especially for storing long articles, comprising shelves (11, 11' …) which, one above the other in spaced relationship, define a plurality of compartments and which are formed by brackets (22, 22' …) located on supports (111) for engaging from below the edges of stored pallets (14), and a lifting device (13, 131) for the pallets (14) displaceable along and/or transversely to the shelves (11, 11' …) and having a device (21) for loading and unloading the pallets (14) comprising supports (215) arranged on trackbound carriages (213) displaceable into the shelves (11, 11' …) and forming a component of said lifting device engaging the pallets (14) at the edges from below and being lowerable on the carriage, whereby tracks (23, 23' …) are provided in the shelves (11, 11' …) for the carriages (213) for engaging the pallets (14) from below and said tracks project beyond the brackets (22, 22' …) and self-supporting pallets (14) forming a component of the storage device, characterised by the feature that, with the tracks (23, 23' …) provided for the carriages (213) having the pallet supports (215), the pallets (14) which are provided with cantilever supports (141), engage over the shelves and terminate with spacing from the tracks (23, 23' …) so as to form travel paths (x) for the carriages (213).

2. Installation according to claim 1, characterised by a positive guidance of the carriages (213) fitted with the supports (215) for the pallets (214) on tracks (23, 23' …) forming a component of the shelves (11, 11' …).

3. Installation according to claim 2, characterised by guide rails (231, 231' …) provided on the tracks (23, 23' …) and guide rollers (218, 218') provided between the rollers (214, 214' …) of the carriages (213).

4. Installation according to any of the claims 1 to 3, characterised by the feature that the surface of the supports (215) for engaging beneath the pallets (14) are formed by transverse rollers (217).

5. Installation according to any of claims 1 to 4, characterised by the feature that in the shelf (11, 11' …) lateral stops (24) are provided on the brackets (22, 22' …) engaging beneath the pallets (14).

6. Installation according to any of the claims 1 to 5, characterised by the feature that in the shelves the brackets (22, 22' …) engaging beneath the pallets (14) and the tracks (23, 23' …) provided in the shelves (11, 11' …) for the carriages (213) fitted with the supports (215) engaging beneath the pallets, are a component of a rolled or drawn product.

## Revendications

1. Dispositif de stockage de palettes, destiné en particulier, à stocker un matériau allongé, constitué par des rayonnages (11, 11' ...) qui présentent une pluralité de casiers, superposés à intervalle les uns des autres, formés par des consoles (22, 22' ...) placées sur des montants (111) et soutenant des palettes (14) stockées par leurs faces frontales, un dispositif élévateur (13, 131) destiné aux palettes, mobile le long des rayonnages (11, 11' ...) ou perpendiculairement à ceux-ci, comportant un dispositif (21) pour mettre en place et retirer les palettes (14), en forme de supports (215) pouvant être amenés dans le rayonnage (11, 11' ...), en soutenant les palettes (14) aux extrémités, placés de façon à pouvoir être abaissés sur des chariots (213) guidés faisant partie du dispositif élévateur, des voies étant prévues pour les chariots (213) dans les rayonnages (11, 11' ...) au-dessous des consoles (22, 22' ...) soutenant les palettes (14), et dépassant des consoles (22, 22'), et des palettes autoporteuses (14) faisant partie du dispositif de stockage, caractérisé en ce que les palettes (14) comportant des bords d'appui (141) en porte à faux, s'étendant au-dessus des voies (23, 23' ...) destinées aux chariots (213) pourvus des supports de palettes (215) dans le rayonnage, se terminent en deçà des voies (23, 23' ...) en délimitant des trajets de roulement (X) pour les chariots (213).

2. Dispositif selon la revendication 1, caractérisé par un guidage forcé des chariots (213) pourvus des supports (215) des palettes (14) sur les voies (23, 23' ...) faisant partie du rayonnage (11, 11' ...).

3. Dispositif selan la revendication 2, caractérisé par des guides (231, 231') se trouvant sur les voies (23, 23' ...) et des galets de guidage (218, 218') se trouvant entre les roues de roulement (214, 214' ...) des chariots (213).

4. Dispositif selon l'une des revendications 1 à 3, caractérisé en ce que la surface des supports (215) soutenant les palettes (14) est formée par des rouleaux transversaux (217).

5. Dispositif selon l'une des revendications 1 á 4, caractérisé en ce que des butées latérales (24) se trouvent sur les consoles (22, 22') soutenant les palettes (14) dans le rayonnage (11, 11' ...).

6. Dispositif selon l'une des revendications 1 á 5, caractérisé en ce que les consoles (22, 22' ...) soutenant les palettes (14) dans les rayonnages (11, 11') et les voies (23, 23') se trouvant dans les rayonnages (11, 11' ...), destinées aux chariots (213) pourvus des supports (215) soutenant les palettes (14) font partie d'un profilé laminé ou étiré.

*Fig.1*

Fig.2

_Fig. 3_

_Fig. 4_

0 053 170

Fig. 5

Fig. 6

0 053 170